# EUROPEAN PATENT APPLICATION

(11) **EP 4 553 505 A1**
(43) Date of publication of application: **14.05.2025**
(21) Application number: 23208906.0
(22) Date of filing: 09.11.2023
(51) Int. Cl.: G01Q 10/04, G01Q 10/06, G01Q 20/02

(54) **SCANNING PROBE MICROSCOPE**

(71) Applicant: Infinitesima Limited, Abingdon, Oxfordshire OX14 1RG (GB)
(72) Inventor: The designation of the inventor has not yet been filed
(74) Representative: Ribeiro, James Michael

(57) **Abstract**

A scanning probe microscope configured to measure a topography of a sample, the scanning probe microscope comprising: a probe mount; a cantilever carried by the probe mount, the cantilever extending from a proximal end at the probe mount to a distal end remote from the probe mount; a probe tip at the distal end of the cantilever; a scanning system configured to generate a relative scanning motion between the probe mount and the sample; an interferometer configured to measure a height of the distal end of the cantilever to generate a height measurement signal; a signal processor configured to monitor the height measurement signal to obtain a series of topography measurements indicative of a topography of the sample; a height actuation system configured to adjust a height of the proximal end of the cantilever by moving the probe mount under control of a height control signal; a photothermal actuation system configured to bend the cantilever by illuminating the cantilever with an actuation beam under control of a photothermal offset signal and an oscillation signal; an oscillation signal generator configured to generate the oscillation signal; and a feedback control system configured to adjust the photothermal offset signal and the height control signal on a basis of the height measurement signal.

## Description

### FIELD OF THE INVENTION

The present invention relates to a scanning probe microscope, and an associated method.

### BACKGROUND OF THE INVENTION

WO2010067129A1 discloses a dynamic probe detection system for use with a scanning probe microscope of the type that includes a probe that is moved repeatedly towards and away from a sample surface. As a sample surface is scanned, an interferometer generates an output height signal indicative of a path difference between light reflected from the probe and a height reference beam. Signal processing apparatus monitors the height signal and derives a measurement for each oscillation cycle that is indicative of the height of the probe. This enables extraction of a measurement that represents the height of the sample, without recourse to averaging or filtering, that may be used to form an image of the sample. The detection system may also include a feedback mechanism that is operable to maintain the average value of a feedback parameter at a set level.

US6189374 discloses an AFM that combines an AFM Z position actuator and a self-actuated Z position cantilever (both operable in cyclical mode and contact mode), with appropriate nested feedback control circuitry to achieve high-speed imaging and accurate Z position measurements. A preferred embodiment of an AFM for analyzing a surface of a sample includes a self-actuated cantilever having a Z-positioning element integrated therewith and an oscillator that oscillates the self-actuated cantilever at a frequency generally equal to a resonant frequency of the self-actuated cantilever and at an oscillation amplitude generally equal to a setpoint value. The AFM includes a first feedback circuit nested within a second feedback circuit, wherein the first feedback circuit generates a cantilever control signal in response to vertical displacement of the self-actuated cantilever during a scanning operation, and the second feedback circuit is responsive to the cantilever control signal to generate a position control signal. A Z position actuator is also included within the second feedback circuit and is responsive to the position control signal to position the sample. In operation, preferably, the cantilever control signal alone is indicative of the topography of the sample surface.

Non-patent literature (NPL) [1] combines the fast response of photothermal cantilever excitation with a conventional piezoactuator, resulting in a fast force-clamp with high accuracy and large working distances.

NPL [2] applies photothermal bending of a cantilever induced by an intensity-modulated infrared laser to control the tip-surface distance in atomic force microscopy. The slow response of the photothermal expansion effect is eliminated by inverse transfer function compensation. By regulating the laser power and regulating the cantilever deflection, the tip-sample distance is controlled; this enables much faster imaging than that in conventional piezoactuator-based z scanners because of the considerably higher resonant frequency of small cantilevers.

In NPL [3] a flexible system for increasing the throughput of an atomic force microscope without sacrificing imaging range is presented. The system is based on a nested feedback loop which controls a micromachined cantilever that contains both an integrated piezoelectric actuator and an integrated thermal actuator.

NPL [1]: Stahl SW, Puchner EM, Gaub HE. Photothermal cantilever actuation for fast single-molecule force spectroscopy. Rev Sci Instrum. 2009 Jul;80(7):073702. doi: 10.1063/1.3157466. PMID: 19655951.

NPL [2]: Yamashita H, Kodera N, Miyagi A, Uchihashi T, Yamamoto D, Ando T. Tip-sample distance control using photothermal actuation of a small cantilever for high-speed atomic force microscopy. Rev Sci Instrum. 2007 Aug;78(8):083702. doi: 10.1063/1.2766825. PMID: 17764324.

NPL [3]: T. Sulchek, S. C. Minne, J. D. Adams, D. A. Fletcher, A. Atalar, C. F. Quate, D. M. Adderton; Dual integrated actuators for extended range high speed atomic force microscopy. Appl. Phys. Lett. 13 September 1999; 75 (11): 1637-1639. https://doi.org/10.1063/1.124779.

### SUMMARY OF THE INVENTION

A first aspect of the invention provides a scanning probe microscope configured to measure a topography of a sample, the scanning probe microscope comprising: a probe mount; a cantilever carried by the probe mount, the cantilever extending from a proximal end at the probe mount to a distal end remote from the probe mount; a probe tip at the distal end of the cantilever; a scanning system configured to generate a relative scanning motion between the probe mount and the sample; an interferometer configured to measure a height of the distal end of the cantilever to generate a height measurement signal; a signal processor configured to monitor the height measurement signal to obtain a series of topography measurements indicative of a topography of the sample; a height actuation system configured to adjust a height of the proximal end of the cantilever by moving the probe mount under control of a height control signal; a photothermal actuation system configured to bend the cantilever by illuminating the cantilever with an actuation beam under control of a photothermal offset signal and an oscillation signal; an oscillation signal generator configured to generate the oscillation signal; and a feedback control system configured to adjust the photothermal offset signal and the height control signal on a basis of the height measurement signal.

Optionally the feedback control system comprises an oscillation error detector configured to monitor the height measurement signal to obtain an oscillation parameter and generate an oscillation error signal based on the oscillation parameter and an oscillation parameter setpoint; and wherein the feedback control system is configured to adjust the photothermal offset signal and the height control signal on a basis of the oscillation error signal.

Optionally the feedback control system comprises: a first feedback controller configured to adjust the photothermal offset signal in order to null an input to the first feedback controller; and a second feedback controller configured to adjust the height control signal in order to null an input to the second feedback controller.

Optionally the input to the first feedback controller comprises the oscillation error signal.

Optionally the feedback control system further comprises a photothermal error detector configured to generate a photothermal error signal based on the photothermal offset signal and a photothermal offset setpoint; and the input to the second feedback controller comprises the photothermal error signal.

Optionally the photothermal offset setpoint is at a mid-point of an operating range of the photothermal offset signal.

Optionally the input to the second feedback controller comprises the oscillation error signal.

Optionally the oscillation signal causes the cantilever to bend in a series of oscillation cycles, and the signal processor is configured to obtain a topography measurement indicative of the topography of the sample for each oscillation cycle.

Optionally the signal processor is configured to extract data from a position within each oscillation cycle that satisfies a predetermined measurement criterion.

Optionally the position within each oscillation cycle is an extremal position.

Optionally the signal processor is configured to monitor the height signal and to derive a measurement for each oscillation cycle that is indicative of the height of the probe.

Optionally the photothermal actuation system has a higher bandwidth than the height actuation system.

Optionally the height actuation system has a larger range of motion than the photothermal actuation system.

Optionally the oscillation signal is substantially sinusoidal.

Optionally the height actuation system comprises a piezoelectric actuator.

A further aspect of the invention provides a method of measuring a topography of a sample with a scanning probe microscope according to the first aspect, the method comprising: generating a relative scanning motion between the probe mount and the sample with the scanning system; measuring a height of the distal end of the cantilever with the interferometer to generate a height measurement signal; monitoring the height signal with the signal processor to obtain a series of topography measurements indicative of the topography of the sample; adjusting a height of the proximal end of the cantilever with the height actuation system by moving the probe mount under control of a height control signal; generate an oscillation signal with the oscillation signal generator; bending the cantilever with the photothermal actuation system by illuminating the cantilever with an actuation beam under control of a photothermal offset signal and the oscillation signal; and adjusting the photothermal offset signal and the height control signal with the feedback control system on a basis of the height measurement signal.

### BRIEF DESCRIPTION OF THE DRAWINGS

Embodiments of the invention will now be described with reference to the accompanying drawings, in which:
Figure 1 shows a scanning probe microscope according to a first embodiment of the present invention;
Figure 2 shows a detection system;
Figure 3 shows a sample topography, with an associated photothermal offset signal and height control signal;
Figure 4 shows a first comparative example;
Figure 5 shows a second comparative example;
Figure 6 shows a third comparative example; and
Figure 7 shows a scanning probe microscope according to a second embodiment of the present invention.

### DETAILED DESCRIPTION OF EMBODIMENT(S)

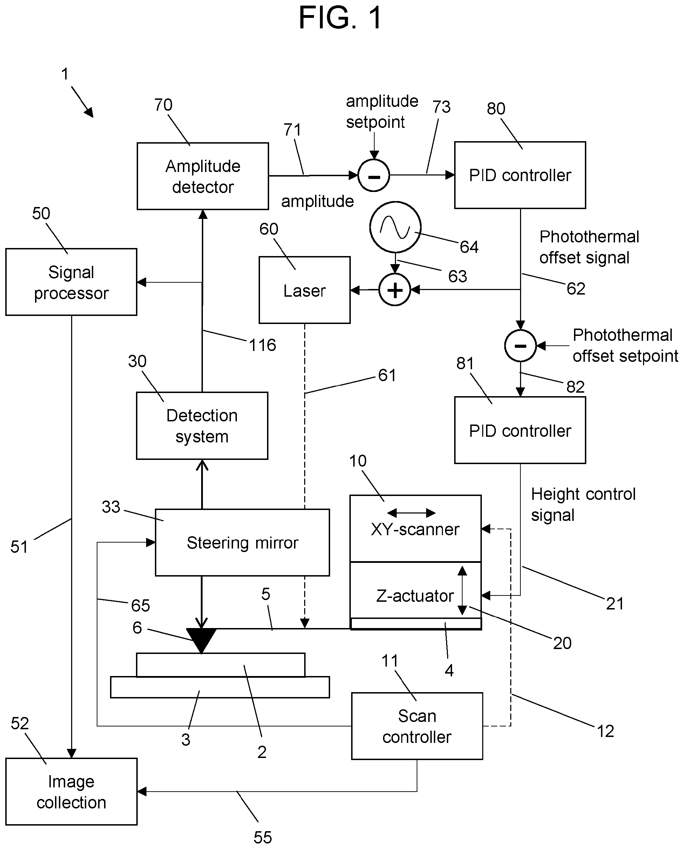

A scanning probe microscope 1 shown in Figure 1 is configured to measure a topography of a sample 2 on a sample stage 3.

The various functional elements of the microscope shown in Figure 1 may be implemented in computer software running on one or more computer processors, or in dedicated hardware.

The scanning probe microscope 1 comprises a probe mount 4; and a probe comprising a cantilever 5 and probe tip 6. The cantilever 5 is carried by the probe mount 4, the cantilever 5 extending from a proximal end at the probe mount to a distal end remote from the probe mount. The probe tip 6 is at the distal end of the cantilever 5.

A scanning system 10, 11 is configured to generate a relative scanning motion between the probe mount 4 and the sample 2 in a horizontal (X,Y) plane. In this case the relative scanning motion is achieved by motion of the probe mount 4, but in other embodiments the relative scanning motion may achieved by motion of the sample stage 3.

A height actuation system 20 is configured to adjust a height of the proximal end of the cantilever by moving the probe mount 4 under control of a height control signal 21.

The height actuation system in this case comprises a Z-actuator 20, such a piezoelectric actuator, which is configured to translate the probe mount up and down in an essentially vertical (Z) direction on a basis of the height control signal 21.

The scanning system in this case comprises an XY-scanner 10, such as a pair of piezoelectric actuators which each move the Z-actuator 20 and the probe mount 4 in a respective horizontal direction (X or Y). The XY-scanner 10 is driven by scanning drive signals 12 from a scan controller 11.

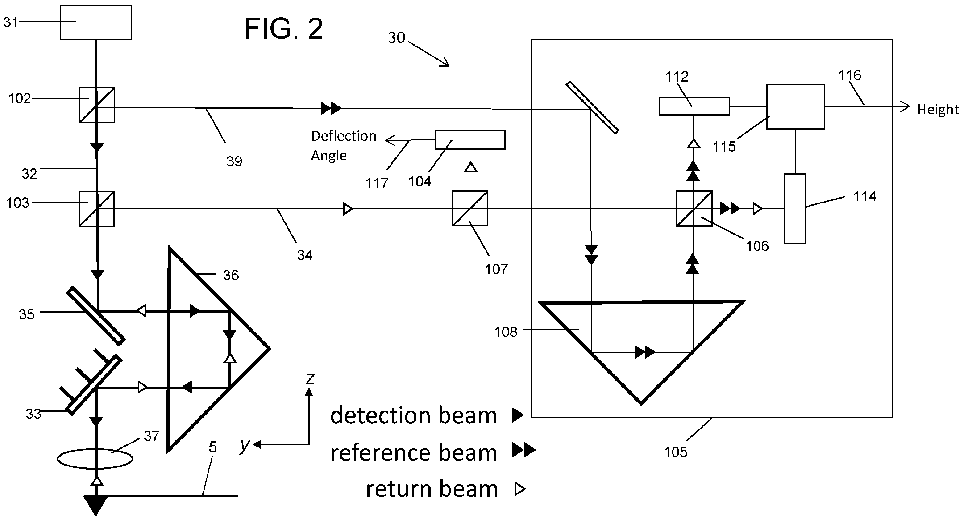

A detection system 30 is shown schematically in Figure 1 and in further detail in Figure 2.

A laser light source 31 generates a detection beam 32 which is steered onto the distal end of the cantilever 5 by a steering mirror 33. The distal end of the cantilever 5 reflects the detection beam 32 to generate a return beam 34.

The detection beam 32 is reflected from a fixed mirror 35 towards a right-angle block 36. The right angle block 36 is oriented such that the detection beam 32 is incident normally on the entry face. The detection beam 32 propagates to the steering mirror 33 and is reflected towards an objective lens 37. As the steering mirror 33 tilts, the reflected detection beam 32 deflects, with the result that the angle and point of incidence of the detection beam 32 into the objective lens 37 changes. Synchronisation of the angle of the steering mirror 33 with the XY scanning pattern followed by the probe mount 4 as it is driven by the XY scanner 10 means that the detection beam 32 retains its position on the distal end of the cantilever 5.

The light from the laser light source 31 is split by a beam splitter 102 into the detection beam 32 and a reference beam 39. The return beam 34 is directed into the detection system 30 by a second beam splitter 103. The return beam 34 is then split by a third beam splitter 107 into a first component which falls on a split photodiode 104, and a second component which is directed into an interferometer 105.

The split photodiode 104 is a position sensitive detector which generates a deflection signal 117 in accordance with an offset of the first component of the return beam 34 relative to the split photodiode 104. The deflection signal 117 is indicative of a deflection angle of the cantilever. Typically the split photodiode 104 is split into four quadrants, the ratios between the signals from the four quadrants indicating offsets in X and Y of the first component of the return beam 34 relative to the split photodiode 104.

Inside the interferometer 105, the second component of the return beam 34 is split by a beam splitter 106. The reference beam 39 is directed onto a retroreflector 108 and thereafter to the beam splitter 106. The beam splitter 106 has an energy absorbing coating and splits both the return beam 34 and the reference beam 39 to produce first and second interferograms with a relative phase shift of ~ 90°. The two interferograms are detected respectively at photodetectors 112, 114.

Ideally, the photodetector signals are complementary sine and cosine signals with a phase difference of 90°. Further, they should have no dc offset, have equal amplitudes and only depend on the position of the cantilever and wavelength λ of the laser. Known methods are used to monitor the outputs of the photodetectors 112, 114 while changing the optical path difference in order to determine and to apply corrections for errors arising as a result of the two photodetector signals not being perfectly harmonic, with equal amplitude and in phase quadrature. Similarly, dc offset levels are also corrected in accordance with methods known in the art.

These photodetector signals are suitable for use with a conventional interferometer reversible fringe counting apparatus and fringe subdividing apparatus, which may be provided as dedicated hardware or as a programmed computer. Phase quadrature fringe counting apparatus is capable of measuring displacements in the position of the cantilever to an accuracy of λ/8. That is, to 66 nm for light with a wavelength of 532. Known fringe subdividing techniques, based on the arc tangent of the signals, permits an improvement in accuracy to the nanometre scale or less. Interferometric methods of extracting the path difference between two coherent beams are well known in the art and so will not be described in any further detail. In Figure 2 a processor 115 is shown which receives the signals from the photodetectors 112, 114 and performs the fringe counting and subdividing mentioned above to generate a height measurement signal 116.

In summary, the interferometer 105 is arranged to detect a path difference between light 34 reflected from the distal end of the cantilever and a height reference beam 39. The height measurement signal 116 is indicative of this path difference, and hence indicative of a height of the distal end of the cantilever 5.

Returning to Figure 1: a signal processor 50 is configured to monitor the height measurement signal 116 to obtain a series of topography measurements indicative of a topography of the sample. These topography measurements may be output as a topography measurement signal 51 to an image collection module 52.

A photothermal actuation system 60 is configured to bend the cantilever 5 by illuminating the cantilever with an actuation beam 61 under control of a photothermal offset signal 62 and an oscillation signal 63. An oscillation signal generator 64 is configured to generate the oscillation signal 63. The oscillation signal 63 may be substantially sinusoidal, at a resonant frequency of the cantilever 5.

The cantilever 5 has a thermal bimorph structure, the materials of which undergo differential expansion when heated. In one embodiment, the cantilever 5 is fabricated from silicon nitride with an aluminium coating. The photothermal actuation system 60 comprises a laser which emits the actuation beam 61 which contains light at a wavelength at which there is a maximum or peak in the absorption spectrum for the particular coating. For example the wavelength may be around the aluminium absorption peak at ~810 nm. Other coating / wavelength combinations can be used, for example gold has a higher absorption at wavelengths below 500 nm. When this light is incident on the coating side of the cantilever 5, the aluminium expands to a greater degree than the silicon nitride, bending the cantilever such that the tip moves downwards, towards the sample. If illumination intensity is increased, the tip therefore moves closer to the sample surface. Conversely, if the intensity is lowered, bending is decreased and the tip is moved away from the sample. Other arrangements of coating and base materials may result in different levels of bending in the same or opposite direction in response to illumination.

As explained above, the detection beam 32 of Figure 2 is directed onto the cantilever by a steering mirror 33 and an objective lens 37. As the steering mirror 33 tilts, the reflected detection beam 32 deflects and retains its position on the distal end of the cantilever 5.

The actuation beam 61 is also directed onto the cantilever by the steering mirror 33 and the objective lens 37. As the steering mirror 33 tilts, the actuation beam 61 deflects and retains its position on the cantilever 5 (in this case towards the proximal end of the cantilever).

Thus the steering mirror 33 retains the positions of both beams 32, 61 on the cantilever 5. The steering mirror 33 is driven by steering signals 65 from the scan controller 11.

A feedback control system 80, 81 is configured to adjust the photothermal offset signal 62 and the height control signal 21 on a basis of the height measurement signal 116, so that the probe tip follows the topography of the sample 2.

The feedback control system comprises an oscillation error detector configured to monitor the height measurement signal 116 to obtain an oscillation parameter 71 and generate an oscillation error signal 73 based on the oscillation parameter and an oscillation parameter setpoint.

In this example, the oscillation parameter is an amplitude 71 measured by an amplitude detector 70, and the oscillation parameter setpoint is an amplitude setpoint. In other examples the oscillation parameter may be a phase or frequency

The amplitude setpoint is subtracted from the amplitude 71 to generate the oscillation error signal, which in this case is an amplitude error signal 73. The feedback control system is configured to adjust the height control signal 21 and the photothermal offset signal 62 on a basis of this amplitude error signal 73, as described below.

The feedback control system comprises a first feedback controller 80 configured to adjust the photothermal offset signal 62 in order to null an input to the first feedback controller 80.

In this embodiment, the input to the first feedback controller 80 comprises the amplitude error signal 73. Hence the first feedback controller 80 is configured to adjust the photothermal offset signal 62 so that the amplitude 71 remains at the amplitude setpoint.

By way of example, the first feedback controller 80 may comprise a proportional-integral (PI) feedback controller or a proportional-integral-differential (PID) feedback controller.

A second feedback controller 81 is configured to adjust the height control signal 21 in order to null an input to the second feedback controller 81.

The feedback control system comprises a photothermal error detector configured to generate a photothermal error signal 82 based on the photothermal offset signal 62 and a photothermal offset setpoint; and the input to the second feedback controller 81 comprises this photothermal error signal 82.

The photothermal offset setpoint may be subtracted from the photothermal offset signal 62 to generate the photothermal error signal 82. The photothermal offset setpoint may be set at a mid-point of an operating range of the photothermal offset signal 62. Hence the second feedback controller 81 is configured to adjust the height control signal 21 so that the photothermal offset signal 62 remains at the mid-point of its operating range.

In taking an image of the sample, the scanning probe microscope is operated in dynamic mode as follows. The cantilever 5 is set into resonant oscillatory motion by the oscillation signal generator 64. Using the Z-actuator 20, the probe tip 6 is first brought into intermittent contact with the sample 2. Conventionally, in AFM terminology, the probe tip 6 is said to be in contact with the sample 2 when the atomic interaction force is in the repulsive regime. The probe mount 4 is lowered, moving the probe tip towards the sample 1 whilst, in this embodiment, the detection system 30 monitors the oscillating and time-varying deflection of the cantilever. When the amplitude of deflection oscillation reaches a predetermined level the movement of the probe mount 4 is stopped. This predetermined amplitude level is the amplitude setpoint for the feedback controller 80.

As the scan progresses, the probe tip 6 moves up and down as surface height / interaction force varies. Superimposed on this surface-induced motion is a higher frequency component arising from the oscillatory motion of the cantilever. The amplitude, phase and frequency of this oscillatory component of the probe tip's motion will all be dependent on both the oscillator settings and the interaction force between surface and probe tip. Similarly, the height of the probe tip is a superposition of a component arising from interaction with the sample surface and a second component due to probe oscillations. The amplitude, phase and frequency of the second component are affected by the probe tip's position with respect to the surface. As the scan progresses, the amplitude of the ac component of the height measurement signal 116 is monitored.

It will be appreciated that the height measurement signal 116 contains accurate information relating to the height of the probe tip, but this must be related to features of the sample surface in order for useful information to be obtained. In theory, the lowest point of each oscillation cycle represents the true height of the surface. Accordingly the signal processor 50 may be set up in order to be able to find the lowest height measurement for each period of probe oscillation and this is then output as a topography measurement signal 51 that can be used by the image collection module 52 to form an image. That is, the lowest point in each oscillation cycle is representative of the position of the sample surface.

Other points of the high-frequency oscillation component of the signal may also be used to provide a meaningful indicator of sample surface position. For example, the point of minimum velocity during the lower half of the oscillation cycle may be extracted by the data processing system. If imaging a compliant surface then the probe velocity, or equivalently rate of change of the height signal, will fall as it encounters and begins to deforms the surface. In this instance a measure of sample height may be extracted from the point of each height oscillation at which a variation in the rate of change of probe height is observed.

The signal processer 50 is preferably arranged to extract data from a position within each oscillation cycle of the height measurement signal 116 that satisfies a predetermined measurement criterion. This may be when the cycle indicates an extremal path difference, a minimum rate of change in path difference, or another suitable indicator. This ensures that the measurement point is extracted at a position most likely to reflect the true height of the sample. For example, at a minimum (or maximum) path difference it can be inferred that the probe tip is in contact with the sample surface. This improves the accuracy of information extracted by the detection system 30, which may then be used by the image collection module 52 to generate an image of the sample surface. This image may reflect surface height, or any other aspect of the topography of the sample.

In this example, an image collection module 52 constructs an image on the basis of the topography measurement signal 51, and an XY position signal 55 from the scan controller 11 which indicates the current XY position of the probe tip.

In other embodiments of the invention, rather than generating an image with an image collection module 52, the scanning probe microscope 1 may use the topography measurement signal 51 in some other way - for instance to measure a critical dimension of the sample (such as a wall height, wall angle, trench width, etc.). In this case a series of topography measurements may be measured with only a single line scan (for instance across a trench) rather than scanning in two-dimensions to generate a topographical image.

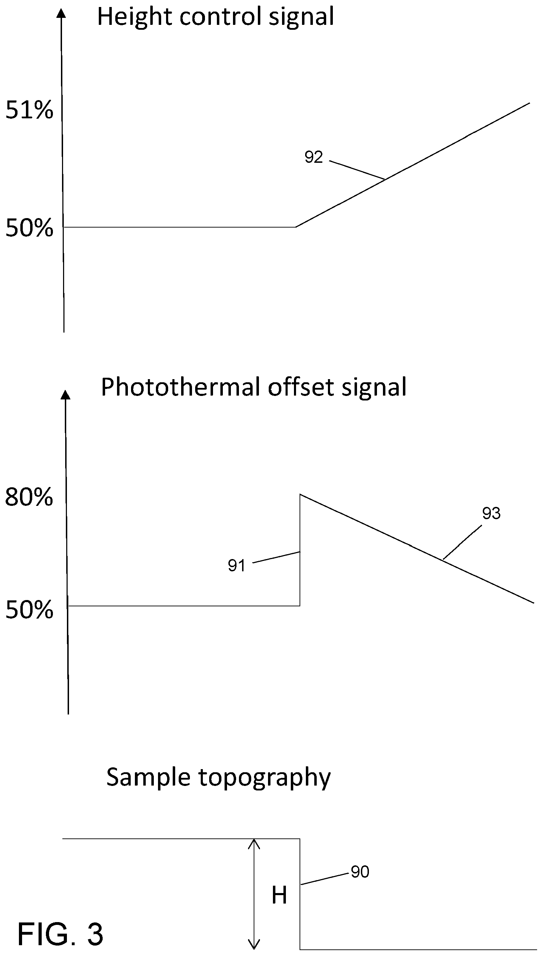

Figure 3 gives an example of a topography of the surface of the sample 2. In this case, the surface of the sample has a steep sidewall 90 with a height H. Sidewalls of this type are common in semiconductor samples, for instance at a sidewall of a trench or other feature.

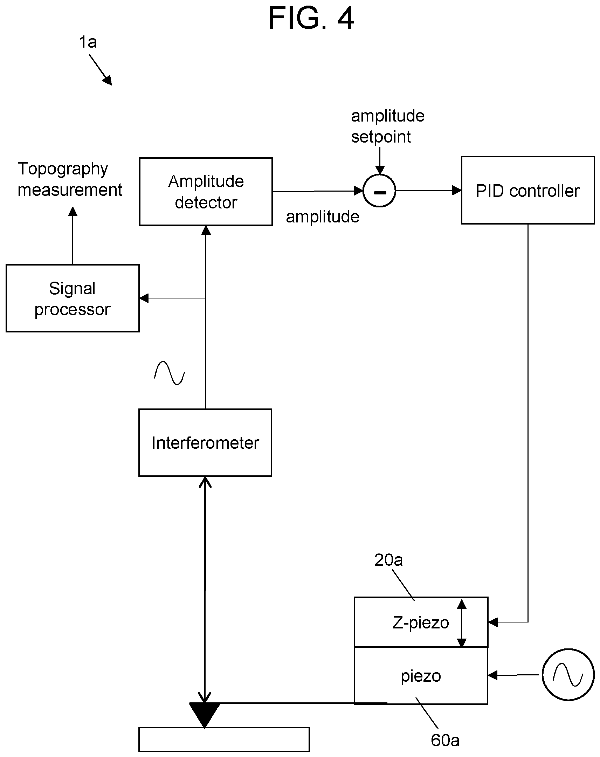

Figure 4 shows a scanning probe microscope 1a according to a comparative example, not according to the present invention. In this case, the resonant oscillation is driven by a piezoelectric actuator 60a rather than the photothermal actuation system 60 of Figure 2. A height actuation system 20a, similar to the Z-actuator 20 of Figure 2, is configured to adjust a height of the proximal end of the cantilever by moving the probe mount under control of a height control signal from a PID controller. The scanning probe microscope 1a is similar to the scanning probe microscope described in WO2010067129A1.

A first problem with the scanning probe microscope 1a of Figure 4 is that the piezoelectric actuator 60a has a low bandwidth. As a consequence, in order to accurately image the steep sidewall 90, the probe must be scanned slowly in the XY plane. Slow scan rates are particularly problematic in the analysis of semiconductor samples, for instance for process monitoring and control in a semiconductor fabrication plant or other high volume manufacturing facility.

A second problem is that the piezoelectric actuator 60a may respond to the oscillation signal with its own resonances, which can cause undesirable characteristics in the oscillation of the cantilever.

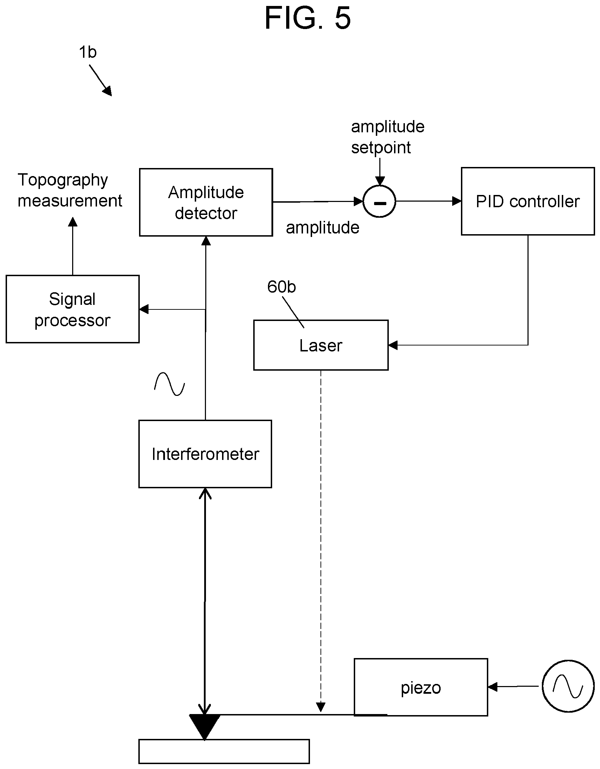

Figure 5 shows a scanning probe microscope 1b according to a second comparative example, not according to the present invention. In this case the vertical motion of the probe is driven photothermally by a laser 60b which has a higher bandwidth than the piezoelectric actuator 60a and hence can drive the probe tip down more rapidly to the bottom of the sidewall 90.

A problem with the scanning probe microscope 1b of Figure 5 is that the photothermal actuation system has a small range, which may be less than the height H of the sidewall 90. The scanning probe microscope 1b of Figure 5 also suffers from the problem of undesirable resonances in the piezoelectric actuator.

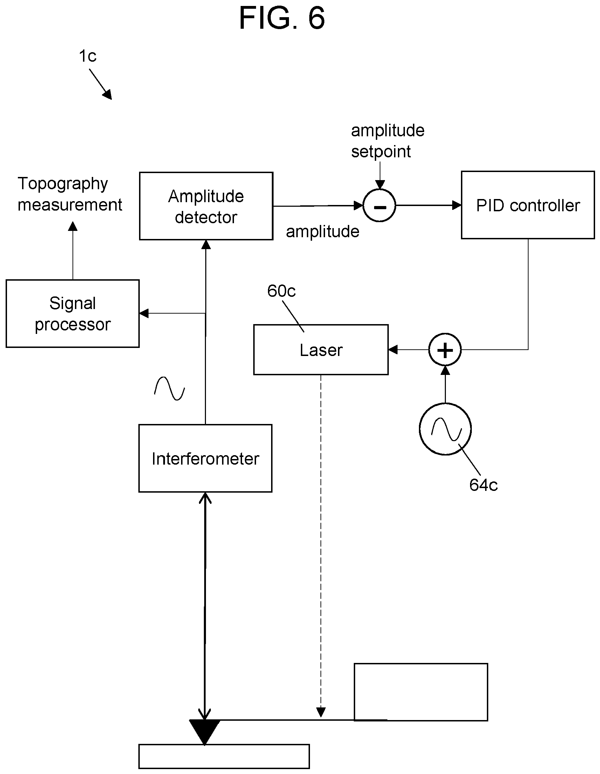

Figure 6 shows a scanning probe microscope 1c according to a third comparative example, not according to the present invention.

In this case a photothermal actuator 60c drives both the oscillation of the probe (via an oscillation signal from an oscillation signal generator 64c) and the DC offset of the probe, following the profile of the sample.

The scanning probe microscope 1c of Figure 6 has the same range problem as scanning probe microscope 1b of Figure 5 but does has various advantages over the scanning probe microscope lb, namely: the number of actuators is reduced (one actuator rather than two); and the direct drive of the cantilever results in a cleaner excitation of the cantilever, avoiding the undesirable oscillation characteristics caused by the piezoelectric actuator 60a.

The range problem could be solved by increasing the length of the cantilever, but this would increase its thermal mass which in turn would make it respond more slowly to photothermal heating (in other words, it would reduce the bandwidth of the photothermal actuation system).

The scanning probe microscope 1 of Figure 1 includes the advantages of the scanning probe microscope 1c of Figure 6 but addresses the range problem without reducing the bandwidth.

Figure 3 shows the photothermal offset signal 62 as the probe scans across the sidewall 90, from left to right. As the probe reaches the sidewall 90, the photothermal offset signal 62 rapidly jumps at step 91 from 50% to 80%. The percentages indicate the amount of the full range of the photothermal actuation system: i.e. at 0% the cantilever 5 is unbent and at 100% the cantilever 5 is fully bent down. So in this example the height H of the sidewall represents 30% of the dynamic range of the photothermal actuation system. The full range is typically less than 1 micron.

The Z-actuator 20 has a low bandwidth, so it can only react slowly to the sudden change of height at the sidewall 90. Hence the height control signal 21 gradually increases from 50% to 51% in an up-ramp 92. The percentages indicate the amount of the full range of the Z-actuator 20: i.e. at 0% the Z-actuator 20 is un-extended and at 100% the Z-actuator 20 is fully extended. In this example the height H of the sidewall represents only 1% of the dynamic range of the Z-actuator 20. The full range is typically of the order of 10-15 micron, i.e. more than ten times greater than the range of the photothermal actuation system.

As the height control signal 21 gradually increases from 50% to 51% in the up-ramp 92, the first feedback controller 80 causes the photothermal offset signal 62 to gradually reduce via a down-ramp 93, counteracting the up-ramp 92, until the photothermal offset signal 62 returns to its setpoint (in this case, 50%). Hence the feedback control system of the scanning probe microscope 1 addresses the range problem by ensuring that the photothermal offset signal 62 remains close to its setpoint.

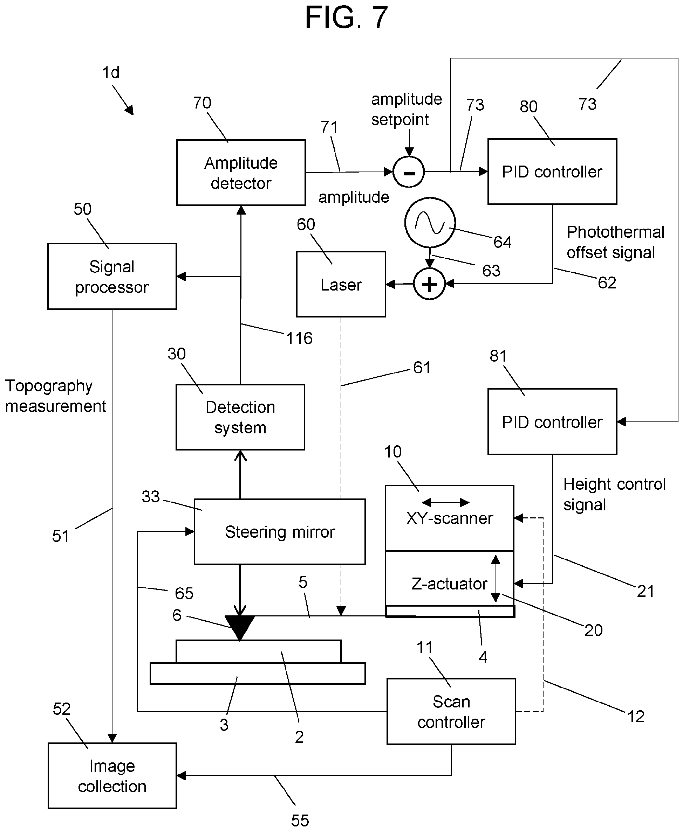

Figure 7 shows a scanning probe microscope 1d according to an alternative embodiment of the invention. Most elements of the scanning probe microscope 1d are identical to the scanning probe microscope 1 of Figure 1, and these elements are given the same reference number.

In the scanning probe microscope 1d, the input to the second feedback controller 81 comprises the amplitude error signal 73, which is fed in parallel to the first and second feedback controllers 80, 81. The scanning probe microscope 1d relies on the second feedback controller 81 operating at a slower rate than the first feedback controller 80.

In summary, the embodiments of the present invention provide a feedback control system comprising a pair of feedback controllers 80, 81 each configured to adjust a photothermal offset signal and a height control signal on a basis of a respective input which is derived (directly or indirectly) from the height measurement signal 116. The first feedback controller 80 may be configured to adjust the photothermal offset signal on a basis of an oscillation error signal which is derived directly from the height measurement signal 116. The second feedback controller 81 may be configured to adjust the height control signal on a basis of either a photothermal error signal (which is derived indirectly from the height measurement signal 116) or on a basis of the oscillation error signal (which is derived directly from the height measurement signal 116).

Although the invention has been described above with reference to one or more preferred embodiments, it will be appreciated that various changes or modifications may be made without departing from the scope of the invention as defined in the appended claims.

## Claims

1. A scanning probe microscope configured to measure a topography of a sample, the scanning probe microscope comprising: a probe mount; a cantilever carried by the probe mount, the cantilever extending from a proximal end at the probe mount to a distal end remote from the probe mount; a probe tip at the distal end of the cantilever; a scanning system configured to generate a relative scanning motion between the probe mount and the sample; an interferometer configured to measure a height of the distal end of the cantilever to generate a height measurement signal; a signal processor configured to monitor the height measurement signal to obtain a series of topography measurements indicative of a topography of the sample; a height actuation system configured to adjust a height of the proximal end of the cantilever by moving the probe mount under control of a height control signal; a photothermal actuation system configured to bend the cantilever by illuminating the cantilever with an actuation beam under control of a photothermal offset signal and an oscillation signal; an oscillation signal generator configured to generate the oscillation signal; and a feedback control system configured to adjust the photothermal offset signal and the height control signal on a basis of the height measurement signal.

2. A scanning probe microscope according to claim 1 wherein the feedback control system comprises an oscillation error detector configured to monitor the height measurement signal to obtain an oscillation parameter and generate an oscillation error signal based on the oscillation parameter and an oscillation parameter setpoint; and wherein the feedback control system is configured to adjust the photothermal offset signal and the height control signal on a basis of the oscillation error signal.

3. A scanning probe microscope according to any preceding claim, wherein the feedback control system comprises: a first feedback controller configured to adjust the photothermal offset signal in order to null an input to the first feedback controller; and a second feedback controller configured to adjust the height control signal in order to null an input to the second feedback controller.

4. A scanning probe microscope according to claim 2 and claim 3, wherein the input to the first feedback controller comprises the oscillation error signal.

5. A scanning probe microscope according to claim 3 or claim 4, wherein the feedback control system further comprises a photothermal error detector configured to generate a photothermal error signal based on the photothermal offset signal and a photothermal offset setpoint; and the input to the second feedback controller comprises the photothermal error signal.

6. A scanning probe microscope according to claim 5, wherein the photothermal offset setpoint is at a mid-point of an operating range of the photothermal offset signal.

7. A scanning probe microscope according to claim 3 or claim 4, wherein the input to the second feedback controller comprises the oscillation error signal.

8. A scanning probe microscope according to any preceding claim, wherein the oscillation signal causes the cantilever to bend in a series of oscillation cycles, and the signal processor is configured to obtain a topography measurement indicative of the topography of the sample for each oscillation cycle.

9. A scanning probe microscope according to claim 8 wherein the signal processor is configured to extract data from a position within each oscillation cycle that satisfies a predetermined measurement criterion.

10. A scanning probe microscope according to claim 9, wherein the position within each oscillation cycle is an extremal position.

11. A scanning probe microscope according to any preceding claim, wherein the signal processor is configured to monitor the height signal and to derive a measurement for each oscillation cycle that is indicative of the height of the probe.

12. A scanning probe microscope according to any preceding claim, wherein the photothermal actuation system has a higher bandwidth than the height actuation system.

13. A scanning probe microscope according to any preceding claim, wherein the height actuation system has a larger range of motion than the photothermal actuation system.

14. A scanning probe microscope according to any preceding claim, wherein the oscillation signal is substantially sinusoidal.

15. A method of measuring a topography of a sample with a scanning probe microscope according to any preceding claim, the method comprising: generating a relative scanning motion between the probe mount and the sample with the scanning system; measuring a height of the distal end of the cantilever with the interferometer to generate a height measurement signal; monitoring the height signal with the signal processor to obtain a series of topography measurements indicative of the topography of the sample; adjusting a height of the proximal end of the cantilever with the height actuation system by moving the probe mount under control of a height control signal; generate an oscillation signal with the oscillation signal generator; bending the cantilever with the photothermal actuation system by illuminating the cantilever with an actuation beam under control of a photothermal offset signal and the oscillation signal; and adjusting the photothermal offset signal and the height control signal with the feedback control system on a basis of the height measurement signal.
